# EUROPÄISCHE PATENTSCHRIFT

(11) **EP 0 491 148 B1**
(45) Veröffentlichungstag und Bekanntmachung des Hinweises auf die Patenterteilung: **07.09.1994**
(21) Anmeldenummer: 91118608.8
(22) Anmeldetag: 31.10.1991
(51) Int. Cl.: B60J 10/10

(54) **Faltdach für Fahrzeuge**
Flexible top for vehicles
Toit ouvrant pliable pour véhicules

(30) Priorität: 17.12.1990 DE 4040254
(43) Veröffentlichungstag der Anmeldung: 24.06.1992
(73) Patentinhaber: Webasto AG Fahrzeugtechnik, D-82131 Stockdorf (DE)
(72) Erfinder: Clemens, Ernst, W-8000 München 19 (DE); Schleicher, Bernd, W-8000 München 19 (DE); Poppele, Gebhard, W-8000 München 50 (DE); Fürst, Arpad, W-8034 Germering (DE); Vecchioni, Bernhard, W-8035 Gauting (DE); Vogel, Wolfgang, W-8035 Stockdorf (DE); Schwab, Günther, W-8027 Neuried (DE); Koll, Jürgen, W-8022 Grünwald (DE); Schmid, Christian, W-8000 München 21 (DE)

(56) Entgegenhaltungen:
- GB-A- 432 141
- GB-A- 945 571
- US-A- 3 476 437
- US-A- 4 611 849

## Beschreibung

Die Erfindung bezieht sich auf ein Faltdach für Fahrzeuge mit einem flexiblen, faltbaren Abdeckteil, welches über eine teilbare Gleitverbindungseinrichtung, wie einen teilbaren Reißverschluß o.dgl., mit einem festen Dachteil verbindbar ist, welches eine Dachöffnung aufweist.

Aus GB-A-2 076 751 sind ein Verfahren und eine Vorrichtung zum Festlegen eines öffenbaren Dachs oder Dachteils eines Fahrzeugs bekannt. Hierbei wird ein öffenbares, vorzugsweise aus einem flexiblen Material bestehendes Dachteil an einem angrenzenden Teil eines Fahrzeugs dadurch fest angebracht, daß eine Hälfte einer teilbaren Gleitverbindungseinrichtung an dem Dach oder dem Dachteil und die andere Hälfte hiervon an dem angrenzenden festen Karosserieteil angebracht ist. Durch das Schließen oder Öffnen der teilbaren Gleitverbindungseinrichtung wird dann das flexible Dachteil an dem festen Karosserieteil, wie einem festen Dachteil, angebracht oder läßt sich von diesem abnehmen. Als teilbare Gleitverbindungseinrichtungen sind dort ein Reißverschluß mit zwei Bändern von ineinandergreifenden Zähnen und einem Schieber oder Kunststoffstrangteile angegeben, die komplementär zueinander ausgebildet sind und wechselseitig in Formschluß miteinander verriegelbar sind. Hierbei werden die den jeweiligen Teilen zugeordneten Tragbänder der teilbaren Gleitverbindungseinrichtung einerseits am festen Dachteil und andererseits an einer starren und festen Einlage des flexiblen Abdeckteils mit Hilfe von Nietverbindungen o.dgl. angebracht. Gesondert hierzu ist eine Dichtung vorgesehen, die eine Abdichtung des Spalts zwischen dem mit dem flexiblen Material des Abdeckteils überzogenen starren Einlageteil und dem festen Dachteil bewirkt, wenn das flexible Abdeckteil mittels der teilbaren Gleitverbindungseinrichtung an dem karosseriefesten Teil angebracht ist. Da bei diesem Sonnendach das flexible Dachteil im Bereich seiner Außenränder einen starren Versteifungsrahmen hat, wird hierdurch die Flexibilität des Abdeckteils zum Freilegen der Dachöffnung eingeschränkt. Ferner sind zur Verwirklichung dieses Dachaufbaus mehrere zusätzliche Arbeitsschritte wie Anbringen der Dichtung und der jeweiligen Tragbänder der teilbaren Gleitverbindungseinrichtung an den jeweils zugeordneten Teilen, erforderlich, so daß hierdurch bedingt die Herstellung und Montage zeitaufwendig und kompliziert werden.

Aus DE-A-3 841 035 sind eine Anordnung zur Fensterbefestigung an einem flexiblen Verdeck und ein Verfahren zum Herstellen einer lösbaren Fensterverbindung bekannt. Zur Herstellung einer derartigen lösbaren Fensterverbindung wird das Tragband eines Reißverschlusses an der Innenseite einer Verdeckbespannung und das andere Tragband des Reißverschlusses an der Innenseite der Fensterscheibe befestigt. Sowohl die fertige Bespannung als auch die Fensterscheibe sind hierbei flexibel, so daß mit Hilfe des Reißverschlusses zwei in sich flexible Teile beispielsweise bei einem flexiblen Klappverdeck verbunden werden. Diese Reißverschlußverbindung ist zwischen der Fensterscheibe und der Verdeckbespannung vorgesehen, um die Fensterscheibe leicht und schnell auswechseln zu können, falls sie verkratzt oder anderweitig beschädigt ist. Ein teilweises Öffnen oder Schließen des Fensters ist dort weder angesprochen noch beabsichtigt.

Aus DE-U-82 05 999 ist ein Verdeckbezug für ein Klappverdeck eines Fahrzeugs, insbesondere eines Personenwagens, bekannt, der sich aus zwei hintereinanderliegenden, über einen Reißverschluß lösbar miteinander verbundenen Verdeckabschnitten zusammensetzt, die beide Außenhautabschnitte des Fahrzeuges bilden. Hierbei sollen die bei der Herstellung des Verdeckbezuges auftretenden Fertigungstoleranzen zuverlässig ausgeglichen werden, und der Verdeckbezug soll bei geschlossenem Klappverdeck immer funktionsgerecht gespannt sein. Hierzu ist eine Innenlage aus einem federnd elastischen Werkstoff hergestellt und unter Vorspannung zwischen dem ersten Verdeckabschnitt und dem zweiten Verdeckabschnitt angeordnet. Auch hierbei werden also zwei flexible Verdeckabschnitte mittels einer Reißverschlußverbindung miteinander verbunden. Zum Auf- und Zuklappen des Klappverdecks ist ein Gelenksystem vorgesehen. Ein solcher Dachaufbau ist insbesondere für sogenannte Cabrio-Fahrzeuge bestimmt. Auf die Verbindung der flexiblen Abdeckabschnitte mit karosseriefesten Teilen wird hierbei nicht eingegangen.

Demgegenüber zielt die Erfindung darauf ab, ein Faltdach für ein Fahrzeug mit einem flexiblen, faltbaren Abdeckteil der gattungsgemäßen Art bereitzustellen, das sich zum wenigstens teilweisen Freigeben der Dachöffnung universell öffnen und schließen läßt, und das sich hinsichtlich der Herstellung und der Montage in wesentlich vereinfachter Form darstellen läßt. Auch soll eine zuverlässige Abdichtung zwischen dem flexiblen Abdeckteil und dem festen Dachteil gegeben sein.

Nach der Erfindung zeichnet sich hierzu ein Faltdach für Fahrzeuge mit einem flexiblen, faltbaren Abdeckteil, welches über eine teilbare Gleitverbindungseinrichtung, wie einen teilbaren Reißverschluß o.dgl., mit einem festen Dachteil verbindbar ist, welches eine Dachöffnung aufweist, dadurch aus, daß an der Begrenzungskante der Dachöffnung ein Profilteil derart vorgesehen ist, daß es einerseits im Zusammenwirken mit dem Abdeckteil eine Außenabdichtung bildet, und andererseits am Profilteil fahrzeuginnenseitig eine Hälfte der teilbaren Gleitverbindungseinrichtung vorgesehen ist.

Bei dem erfindungsgemäßen Faltdach wird also ein Profilteil an der die Dachöffnung umgebenden Begrenzungskante vorgesehen, welches in funktioneller Hinsicht eine Doppelfunktion erfüllt. Zum einen bildet das Profilteil im Zusammenwirken mit dem flexiblen Abdeckteil eine Außenabdichtung, so daß zusätzliche Dichtungsteile oder Dichtungselemente entfallen können, und zudem dient das Profilteil zugleich als Träger für eine Hälfte der teilbaren Gleitverbindungseinrichtung, so daß durch dieses synergistische Zusammenwirken der Eigenschaften des Profilteils und unter Ausnutzung des Eigenelastizitätsverhaltens des Profilteils sowohl eine zuverlässige Abdichtung als auch eine leichtgängige teilbare Gleitverbindungseinrichtung zum flexiblen Abdeckteil erhalten werden. Da diese Funktionen in einem Teil, dem Profilteil, vereinigt sind, vereinfacht sich die Herstellung eines solchen Faltdaches und zugleich die Montage desselben. Insbesondere ist eine solche Auslegung eines Faltdachs auch für den Einbau im Fahrzeugmontageband geeignet. Somit behält das flexible, faltbare Abdeckteil weitgehend seine Flexibilität bei und es läßt sich das Faltdach auf nahezu universelle Weise entsprechend den jeweiligen Wünschen öffnen und schließen und es ist sogar möglich, das Faltdach insgesamt vom Fahrzeugdach abzunehmen, und beispielsweise im Gepäckraum des Fahrzeugs zu verstauen. Somit läßt sich mit Hilfe des erfindungsgemäßen Faltdachs eine möglichst große Dachöffnung auf kostengünstige und montagefreundliche Weise im Bedarfsfall bereitstellen.

Vorzugsweise hat das Profilteil einen spitzwinklig zur Dachöffnungsbegrenzungskante angeordneten, fahrzeuginnenseitigen Schenkel, der die eine Hälfte der teilbaren Gleitverbindungseinrichtung trägt. Diese Hälfte der Gleitverbindungseinrichtung kann an diesem Schenkel des Profilteils beispielsweise mittels Kleben o.dgl. befestigt werden, oder die Hälfte kann auch direkt an diesem Schenkel angeformt sein. Somit braucht zur Verwirklichung des erfindungsgemäßen Faltdachs lediglich an der Begrenzungskante der Dachöffnung das Profilteil vorgesehen zu werden, an dem bereits eine Hälfte der teilbaren Gleitverbindungseinrichtung vorhanden ist, so daß man keine zusätzlichen Befestigungsmittel für die teilbare Gleitverbindungseinrichtung benötigt.

Vorzugsweise ist an der Vorderkante und/oder Hinterkante des Abdeckteils im Abstand vom Außenrand wenigstens eine Randaussteifung vorgesehen, welche das flexible Abdeckteil versteift und zugleich zur Positionierung des Abdeckteils am Profilteil dient.

Da vorzugsweise die zweite Hälfte der teilbaren Gleitverbindungseinrichtung am Abdeckteil an einer solchen Stelle angebracht ist, die von dieser Berührung der Randaussteifung mit dem Profilteil in Richtung nach innen liegt, kann das flexible Abdeckteil Zuverlässig so auf dem Profilteil positioniert werden, daß die beiden zu verbindenden Hälften der teilbaren Gleitverbindungseinrichtung so zueinander ausgerichtet sind, daß der oder die zugeordneten Schieber leichtgängig zum Trennen oder Verbinden verschoben werden können, ohne daß es hierzu umständlicher Einfädelungsarbeiten bedarf.

Um eine möglichst zuverlässige Abdichtung zwischen dem flexiblen Abdeckteil und dem festen Dachteil zu erreichen, übergreift der Außenrandbereich des Abdeckteils die Außenseite des Profilteils, so daß man einen möglichst großen Dichtbereich erhält. Zweckmäßigerweise weist der Außenrandbereich des Abdeckteils einen Saum auf, in dem ein weiteres Versteifungsteil, wie ein Spannseil oder dergleichen, angeordnet ist, so daß man eine sichere und zuverlässige Anlage des flexiblen Abdeckteils an dem Profilteil zwischen den Bandversteifungen und dem Spannseil im Saum erhält. Zusätzlich kann das Abdeckteil wenigstens eine Querversteifung umfassen, um beispielsweise einen Bruch des Faltdaches durch Schneelasten o.dgl. zu vermeiden. Auch wird hierdurch die passive Fahrzeugsicherheit verbessert. Vorzugsweise sind in Längsrichtung des Abdeckteils wenigstens zwei Querversteifungen vorgesehen, die in regelmäßigen Abständen voneinander in Längsrichtung vorgesehen sind. Hierdurch wird dem flexiblen Abdeckteil zwar eine gewisse Eigensteifigkeit verliehen, die aber hinsichtlich der Brauchbarkeit die Faltdachfunktion im wesentlichen nicht beeinträchtigen.

Die Randaussteifung wird zweckmäßigerweise von Rohrteilen gebildet. Gleiches gilt auch für die Querversteifungen.

Der Aussteifungsrahmen wird zweckmäßigerweise von Rohrteilen gebildet. Gleiches gilt auch für die Querversteifungen. Die weiteren in den Saum eingelegten Aussteifungsteile werden vorzugsweise von einem Stabmaterial gebildet, das kleinere Abmessungen hat.

Im Hinblick auf die universelle Einsetzbarkeit des Faltdaches ist die teilbare Gleitverbindungseinrichtung wenigstens so vorgesehen, daß es sich über die beiden Längsseiten und wenigstens eine Querseite des Abdeckteils erstreckt. Vorzugsweise ist sie wenigstens in zwei Teilstücke unterteilt, wobei als Symmetrieachse die in Fahrzeuglängsrichtung verlaufende Mittelachse der Dachöffnung genommen werden kann. Insbesondere ist die Gleitverbindungseinrichtung derart beschaffen, daß das Abdeckteil von vorne und/oder von hinten öffen- und schließbar ist, so daß man die jeweils gewünschte Belüftungsmöglichkeit wählen kann. Um den Öffnungs- und Schließvorgang möglichst einfach zu gestalten, umfaßt die Gleitverbindungseinrichtung wenigstens zwei Schieber, die in Gegenrichtungen zum Öffnen und Schließen der Gleitverbindungseinrichtung bewegbar sind. Somit kann man beim Öffnen und Schließen die zurückzulegenden Bewegungsweglängen pro Teil der Gleitverbindungseinrichtung verkleinern, so daß das Faltdach hierdurch äußerst bedienungsfreundlich wird.

Vorzugsweise ist das Profilteil als Umlaufprofilteil und einteilig ausgelegt, um den Montageaufwand so weit wie möglich zu reduzieren, wobei das Profilteil so beschaffen ist, daß es sich beispielsweise auf die Begrenzungskante der Dachöffnung aufstecken läßt, so daß diese Begrenzungskante zugleich als Aufnahme und Halter für das Profilteil dient.

Vorzugsweise ist dem Abdeckteil eine Spanneinrichtung zugeordnet, die von einem dachfest abgestützen Federbügel beispielsweise gebildet werden kann. Diese Spanneinrichtung erzeugt in der Schließstellung des Abdeckteils eine vorbestimmte Spannung, so daß das Abdeckteil und das Material desselben in der Schließlage zuverlässig gespannt sind und ein ansprechendes Äußeres vermitteln. Die übereinandergelegten Abschnitte des Abdeckteils bei wenigstens teilweise freigelegter Dachöffnung können so beschaffen und ausgelegt sein, daß sie in den jeweiligen Klappstellungen lösbar zusammengehalten sind. Hierzu kommen Klettverschlüsse oder Ösen-Schlaufenverbindungen oder Laschenverbindungen oder Schnappverbindungen in Betracht.

Die Erfindung wird nachstehend anhand von bevorzugten Ausführungsformen unter Bezugnahme auf die beigeführte Zeichnung näher erläutert. Darin Zeigt:
- Fig. 1: mit den Fig. 1a und 1b eine perspektivische Draufsicht einer ersten bevorzugten Ausführungsform eines Faltdaches nach der Erfindung mit Schnittdarstellungen,
- Fig. 2: eine Schnittansicht im Bereich der Schnittlinie II-II in Fig. 1 zur Verdeutlichung einer Ausführungsvariante der Anbindung einer Gleitverbindungseinrichtung,
- Fig. 3: eine den Bereich in Fig. 2 entsprechende Schnittansicht zur Verdeutlichung einer abgewandelten Ausführungsform des Abdeckteils im Zusammenwirken mit dem Profilteil,
- Fig. 4: eine Schnittansicht im Bereich der Schnittlinie IV-IV in Fig. 1 zur Verdeutlichung der Abdeckteils nach den Fig. 2 und 3 im Bereich der Längsseiten des Faltdachs,
- Fig. 5: eine schematische Ansicht einer Auslegungsform einer Einrichtung, welche beim Schließen des Faltdachs eine Spannung auf das Abdeckteil aufbringt,
- Fig. 6a und 6b: schematische Ansichten der wesentlichen Öffnungsmöglichkeiten für die Fahrzeugdachöffnung mittels des erfindungsgemäßen Faltdaches.

In den Figuren der Zeichnung sind gleiche oder ähnliche Teile mit denselben Bezugszeichen versehen.

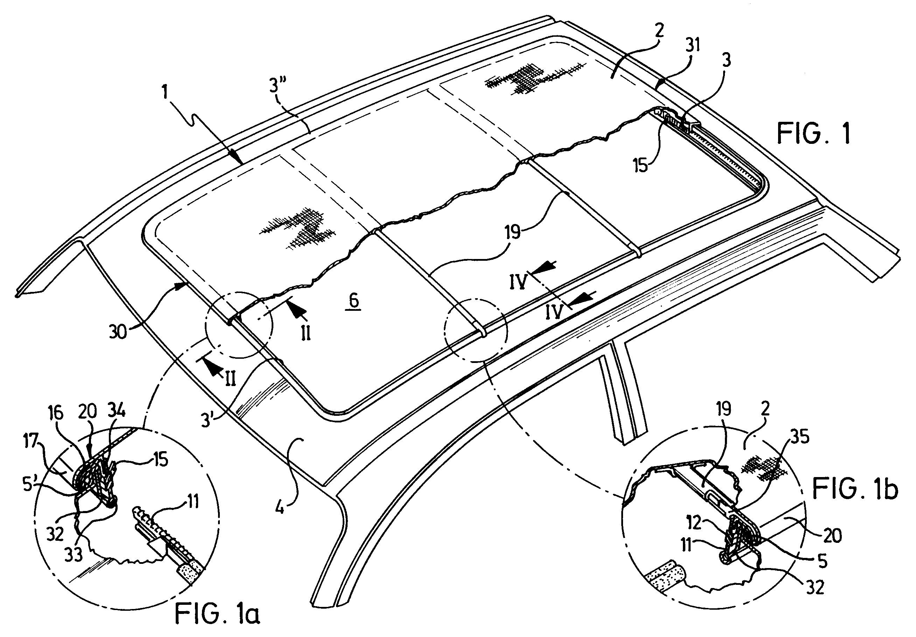

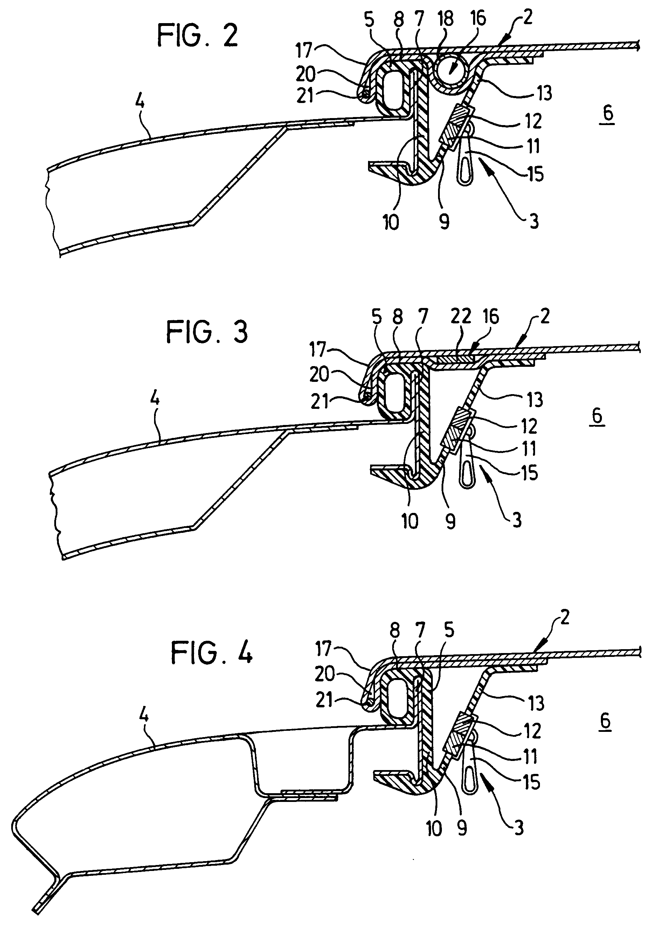

Zuerst werden unter Bezugnahme auf die Fig. 1 und 2 die wesentlichen Einzelheiten der dargestellten bevorzugten Ausführungsform eines insgesamt mit 1 bezeichneten Faltdaches erläutert. Das Faltdach 1 umfaßt ein flexibles, faltbares Abdeckteil 2, welches über eine teilbare Gleitverbindungseinrichtung 3, wie einen Reißverschluß, mit einem festen Dachteil 4 unter Zwischenschaltung eines Profilteils 5 verbunden ist. Wie insbesondere aus Fig. 2 zu ersehen ist, wird eine Dachöffnung 6, die im festen Dachteil 4 vorgesehen ist, von einer beispielsweise etwa senkrecht hochstehenden Begrenzungskante 7 umgeben. Auf diese über den Umriß der Dachöffnung 6 umlaufende Begrenzungskante 7 ist das vorzugsweise einteilig ausgelegte Profilteil 5 aufgesteckt, das zweckmäßigerweise aus einem geeigneten Kunststoffmaterial besteht. Dieses Profilteil 5 umschließt zur Erhöhung seiner Eigenelastizität in einem Teilbereich, nämlich dem Dichtungsbereich 8, einen Hohlraum. Dieser Dichtungsbereich 8 liegt von der Dachöffnung aus gesehen in Richtung nach außen und das Profilteil 5 ist noch auf einem Teil der festen Dachkonstruktion abgestützt. Fahrzeuginnenseitig, d.h. in Richtung zur Dachöffnung 6 weisend, hat das Profilteil 5 einen Schenkel 9, der vorzugsweise spitzwinklig zu dem etwa senkrecht und parallel zur Begrenzungskante 7 verlaufenden Stegteil 10 sich erstreckt. Dieser Schenkel 9 dient als Halter und Träger für eine Hälfte 11 der teilbaren Gleitverbindungseinrichtung 3. Die zweite Hälfte 12 der teilbaren Gleitverbindungseinrichtung 3 ist über ein Verbindungsteil 13 mit dem flexiblen Abdeckteil 2 verbunden. Mit Hilfe eines Schiebers 15 lassen sich die beiden Hälften 11, 12 der Gleitverbindungseinrichtung 3 trennen oder zusammenfügen. Bei der bevorzugten Ausführungsform dient als ein Beispiel für eine derartige teilbare Gleitverbindungseinrichtung 3 ein Reißverschluß mit entsprechenden Zahnketten. Als weiteres Beispiel für eine derartige, teilbare Gleitverbindungseinrichtung 3 kommt beispielsweise eine solche in Betracht, die ein Paar komplementärer, in wechselseitigem Formschluß miteinander verriegelbarer Profilstränge umfaßt. Auch können beim erfindungsgemäßen Faltdach 1 Kombinationen beider teilbarer Gleitverbindungseinrichtungen 3 in Betracht kommen.

Das flexible, faltbare Abdeckteil 2 weist insbesondere nach Fig. 1 eine Randaussteifung 16 an einer Vorderkante 30 und/oder einer Hinterkante 31 auf, die in einem Abstand vom äußeren Rand 17 des Abdeckteils 2 angeordnet ist. Diese Randaussteifung 16 umfaßt vorzugsweise ein Rohrteil 18. Au äußeren Rand 17 des Abdeckteils 2 ist ein Saum 20 vorgesehen, der von einer Doppellage des flexiblen Materials des Abdeckteils 2 gebildet wird. In diesem Saum 20 ist ein weiteres Versteifungsteil 21 eingelegt, das vorzugsweise von einem umlaufenden Spannseil gebildet wird. Bei Verwendung eines Stahlseils als Spannseil ist zwischen den Enden desselben vorzugsweise eine Feder als Zwischenverbindung vorgesehen.

Bei der in Fig. 2 gezeigten Schließstellung der teilbaren Gleitverbindungseinrichtung 3 liegt die Randaussteifung 16 teilweise an dem Profilteil 5 innenseitig an, während das weitere, stabförmige Versteifungsteil 21, wie das Spannseil, im Saum 20 an dem Profilteil 5 außenseitig anliegt. Somit wird das flexible Abdeckteil 2 mit Hilfe der Randaussteifung 16 und dem Spannseil 21 am Profilteil 5 in einer vorbestimmten Lage positioniert, so daß man einen definierten Dichtungsbereich 8 von Abdeckteil 2 und Profilteil 5 zwischen der Randaussteifung 16 und dem Spannseil 21 erhält, wobei im geschlossenen Zustand der teilbaren Gleitverbindungseinrichtung 3 der entsprechende Bereich des flexiblen Abdeckteils 2 in Anlage gegen das Profilteil 5 angedrückt und gespannt wird.

Selbst wenn beispielsweise die teilbare Gleitverbindungseinrichtung offen ist, ist das flexible Abdeckteil 2 mit Hilfe der Randaussteifung 16 und dem Spannseil 21 an dem Profilteil 5 so positioniert, daß die beiden Hälften 11, 12 der Gleitverbindungseinrichtung 3 in vorbestimmter Weise so zueinander ausgerichtet sind, daß man bei einer leichtgängigen Gleitverschiebung des Schiebers 15 diese Gleitverbindungseinrichtung 3 einfach schließen kann. Zweckmäßigerweise sind der Schenkel 9 und das Verbindungsteil 13, welche die beiden Hälften 11, 12 der Gleitverbindungseinrichtung 3 tragen, aus einem Material mit ähnlichen Elastizitätseigenschaften hergestellt, so daß eine möglichst weitgehende Entlastung beim Schließen der Gleitverbindungseinrichtung 3 erreicht wird.

In Fig. 3 ist eine Ausführungsvariante zu der Ausführungsform nach Fig. 2 gezeigt. In Abweichung zu dem Beispiel nach Fig.2 wird hierbei die Randaussteifung 16 von einer ebenen, streifenförmigen Versteifungseinlage 22 gebildet. Ansonsten stimmen die Einzelheiten weitgehend mit jenen überein, die im Zusammenhang mit Fig. 2 erläutert wurden, und die hiermit übereinstimmenden Teile sind mit denselben Bezugszeichen versehen.

Fig. 4 verdeutlicht in einer Schnittansicht im Bereich der Längskante des Abdeckteils 2 das Zusammenwirken von Abdeckteil 2 und Profilteil 5 in der Schließstellung des Faltdaches 1. Wie hieraus zu ersehen ist, ist das Profilteil 5 umlaufend auf die Begrenzungskante 7 der Dachöffnung aufgesteckt. Im Bereich der Längskante des Abdeckteils 2 ist aber nur im Bereich des Saumes 20 das Spannseil 21 als Versteifung vorgesehen, während weitere versteifende Einlagen fehlen.

In Fig. 1a ist eine Ausführungsvariante für eine Anbindung der Gleitverbindungseinrichtung 3 an das feste Dachteil 4 verdeutlicht. Wie bei den voranstehend beschriebenen Ausführungsformen ist auf die hochstehende Begrenzungskante 7 der Dachöffnung 6 ein Profilteil 5' aufgesteckt und übergreift ein Tragteil 32, das beispielsweise mittels Anpunkten fest an der Begrenzungskante 7 der Dachöffnung 6 angebracht ist. Dieses Tragteil 32 hat zur Dachinnenseite weisend eine rinneförmige Ausnehmung 33, in der die erste Hälfte 11 der Gleitverbindungseinrichtung 3 vorzugsweise formschlüssig aufgenommen ist. Die zweite Hälfte 12 der Gleitverbindungseinrichtung 3 ist an einem Ende 34 des Materials des Abdeckteils 2 befestigt, das im Bereich des äußeren Randes 17 unter Bildung eines Saumes 20 auf sich selbst zurückgefaltet ist.

Ferner ist bei dieser Auslegungsform an der Vorderkante 30 oder auch an der Hinterkante 31 des Abdeckteils 2 ein vorzugsweise L-förmig gebogenes Randaussteifungsteil 16' in den dort gebildeten Saum 20 eingelegt.

Aus Fig. 1b ist eine Knotenstelle zwischen einer Querversteifung 19 und dem Profilteil 5' zu ersehen. Die Querversteifung 19 wird von einem Rohrteil gebildet, mit dem in Art einer Steckverbindung ein Einlageteil 35 verbunden ist, welches L-förmig ausgelegt ist und das Profilteil 5 außenseitig wenigstens teilweise übergreift. Gegebenenfalls können die Querversteifungen 19 massiv ausgebildet werden. Diese Querversteifungen 19 sind in das flexible Material des Abdeckteils 2 eingebettet. Gleiche oder ähnliche Querversteifungen 19 können auch bei den anhand den Fig. 2 bis 4 erläuterten Ausführungsformen des Faltdachs 1 vorgesehen sein. Bei dem in Fig. 1 gezeigten Beispiel sind zwei derartige Querversteifungen 19 in Längsrichtung des Abdeckteils im Abstand voneinander vorgesehen.

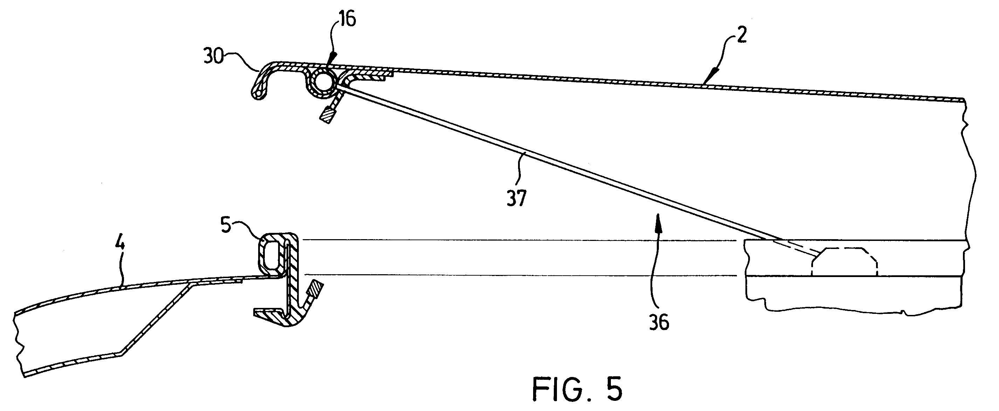

In Fig. 5 ist schematisch eine Spanneinrichtung 36 verdeutliche, welche beim Schließen des Abdeckteils 2 eine vorbestimmte Spannung auf dasselbe aufbringt, so daß im geschlossenen Zustand des Abdeckteils 2 dieses in gespannter Lage weitgehend faltenfrei gehalten ist. Im Abstand von der Vorderkante 30 und/oder der Hinterkante 31 ist hierbei ein Federbügel 37 vorgesehen, der sich einerseits an den Längsseiten am festen Dachteil 4 und/oder am Profilteil 5 oder 5' als festen Widerlagerpunkt abstützt und andererseits im Bereich der Vorderkante 30 und/oder der Hinterkante 31 des Abdeckteils 2 mit diesem oder gegebenenfalls einer dort vorgesehenen Randaussteifung 16, 16' verbunden ist. Diese Spanneinrichtung 36 arbeitet derart, daß bei der Schließbewegung unter Abstützung am festen Dachteil 4 und/oder am dachfesten Profilteil 5, 5' unter Ausführung einer Schwenkbewegung beim Nachinnenziehen des Abdeckteils 2 das Material des Abdeckteils mit einer vorbestimmten Spannkraft beaufschlagt. In der Schließstellung des Abdeckteils 2 kann das vordere Ende des Federbügels 37 gegebenenfalls in eine dachfeste Arretierung eingreifen, um zu erreichen, daß der gewünschte Spannungszustand des Abdeckteils 2 bei geschlossenem Faltdach 1 beibehalten wird.

Bei dem in Fig. 1 gezeigten Beispiel des Faltdachs 1 ist die Gleitverbindungseinrichtung 3 in wenigstens zwei Teilstücke 3', 3'' unterteilt, wozu wenigstens vier Schieber 15 vorgesehen sind, die jeweils paarweise in Gegenrichtungen zum Öffnen und Schließen der Gleitverbindungseinrichtung 3, 3', 3'' verschiebbar sind. Als Symmetrielinie für die Teilung der Gleitverbindungseinrichtung 3 ist bei diesem Beispiel etwa die in Fahrzeuglängsrichtung durch die Dachöffnung 6 gehende Mittelachse gewählt. In Fig. 1a ist die Gleitverbindungseinrichtung 3 an der vorderen Querkante der Dachöffnung 6 in teilweise geöffnetem Zustand verdeutlicht, und die Bewegungsrichtungen des zugeordneten Schiebers 15 oder der zugeordneten Schieber 15 sind mit Pfeilen verdeutlicht. Aus Fig. 1 läßt sich in analoger Weise der Bereich an der hinteren Querkante der Dachöffnung 6 ersehen.

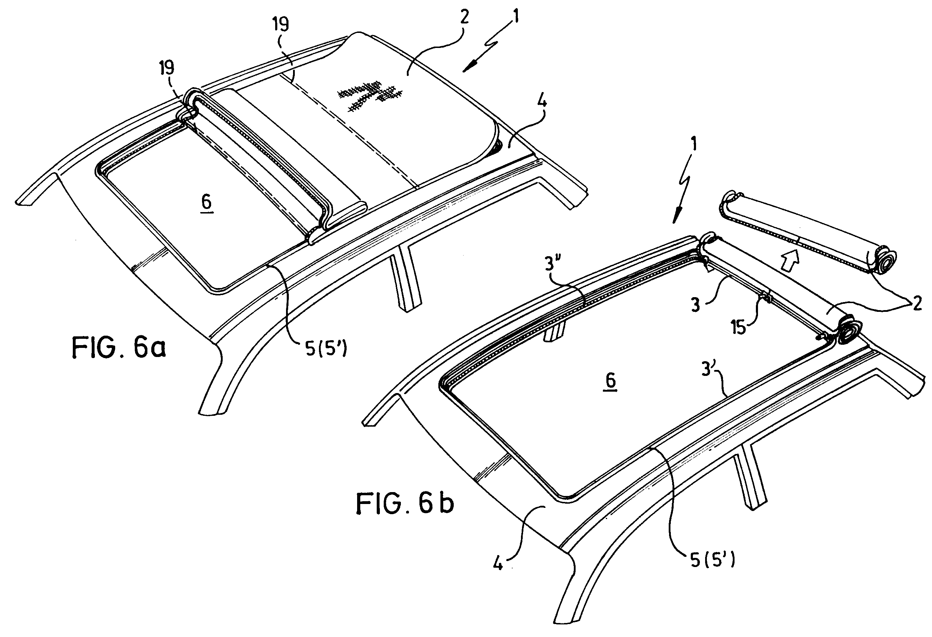

Aus den Fig. 6a und 6b lassen sich verschiedene mögliche Öffnungsstellungen des Faltdachs 1 entnehmen. Diese Öffnungsstellungen können einzeln oder in Kombination miteinander verwirklicht werden, wobei natürlich diese Darstellungen nicht sämtliche mögliche Öffnungsweisen wiedergeben. In Fig. 6a ist beispielsweise der vordere Bereich der Dachöffnung 6 freigelegt, indem die Gleitverbindungseinrichtung 3 in diesem vorderen Bereich teilweise geöffnet ist. Das zwischen einer Querversteifung 19 und dem vorderen Rand des Abdeckteils 2 gebildete Feld ist auf den noch angebrachten Teil des Abdeckteils 2 nach hinten geklappt und kann in dieser Lage mit entsprechenden zusätzlichen Einrichtungen fixiert und festgehalten werden. Hierbei kommen Laschen-Ösenverbindungen oder ineinander verrastbare Einrichtungen in Betracht. In analoger Weise können hierfür Klettverschlüsse verwendet werden.

Ferner ist in Fig. 6a im Bereich der hinteren Querkante der Dachöffnung 6 das flexible Abdeckteil 2 teilweise geöffnet, so daß man zusätzlich bei dem Faltdach 1 in Fig. 6a auch eine Entlüftungsstellung hat und die Luft aus dem Fahrzeuginnenraum durch Sogwirkung im Bereich der Hinterkaate 31 des Faltdaches 1 austreten kann.

Selbstverständlich sind auch Zwischenstellungen des Faltdachs 1 möglich, wobei beispielsweise zwei Felder des dreifeldrigen Abdeckteils 2 aufeinandergeklappt und in dieser Lage fixiert sein können.

In Fig. 6b ist das Faltdach 1 in einem solchen Zustand gezeigt, bei dem die Dachöffnung 6 nahezu vollständig freigegeben ist, aber noch im Bereich der hinteren Querkante am festen Dachteil 4 gehalten und dort zusammengerollt ist. Wie mit einem Pfeil eingetragen, kann man nach Lösen der Gleitverbindungseinrichtung 3 im Bereich der hinteren Querkante 31 dann das Abdeckteil 2 sogar insgesamt abnehmen, und es kann im Fahrzeug verstaut werden, so daß den Fahrzeuginsassen durch die vollständig freigelegte Dachöffnung 6 ein cabrio-ähnliches Gefühl vermittelt wird.

Wie aus den Fig. 6a und 6b zu ersehen ist, ermöglicht das erfindungsgemäße Faltdach 1, daß ein möglichst großer Bereich der Dachöffnung 6 freigelegt werden kann, daß aber auch gewisse Zwischenstellungen bei dem Abdeckteil 2 möglich sind, so daß das Abdeckteil 2 des Faltdaches 1 auf eine Vielzahl von möglichen Weisen die Dachöffnung 6 teilweise freigeben kann. Wenn beispielsweise das abgenommene Abdeckteil 2 wiederum zum Verschließen der Dachöffnung 6 angebracht werden soll, so wird es über die Dachöffnung 6 derart gelegt, daß die Randaussteifungen 16, 16' und das Spannseil 21 des flexiblen Abdeckteils 2, wie dies in Fig. 1 und 2 gezeigt ist, an dem Profilteil 5, 5' so positioniert werden, daß die Hälften 11 und 12 der Gleitverbindungseinrichtung 3 so zueinander liegen, daß sich die Schieber 15 leicht in die Gleitbahn einfädeln lassen, um auf bedienungsfreundliche Weise ein Schließen der Gleitverbindungseinrichtung 3 zu ermöglichen. Mit Hilfe der Spanneinrichtung 36 in Fig. 5 wird dann beim abschließenden Schließen des Abdeckteils 2 eine Verdeckspannung aufgebracht.

Nachstehend soll noch kurz die Montage des Faltdachs 1 erläutert werden. Als Beispiel dient hierbei der Einbau am Fahrzeug-Montageband. Das Fahrzeugdach erreicht die Montagestation für das Faltdach 1 in der Form, daß die hochstehende Begrenzungskante 7 der Dachöffnung 6 bereits vorgeformt ist. Zur Montage wird dann das Profilteil 5, 5' auf die in Fig. 2 gezeigte Weise auf diese hochstehende Begrenzungskante 7 aufgesteckt. Dann braucht nur noch das flexible Abdeckteil 2 unter Positionierung mit Hilfe des Profilteils 5, 5' aufgelegt zu werden, und es können dann die Teilstücke 3', 3'' der Gleitverbindungseinrichtung 3 unter einer leichtgängigen Verschiebebewegung des oder der Schieber 15 geschlossen werden, und dann ist das Faltdach 1 zuverlässig und dicht schließend mit dem festen Dachteil 4 des Fahrzeugs verbunden und mit der Spanneinrichtung 34 wird eine vorbestimmte Verdeckspannung aufgebracht. Das flexible Abdeckteil 2 mit den eingelegten Querversteifungen 19, den Randaussteifungen 16, 16' und dem umlaufenden Spannseil als weiteres Versteifungsteil 21 ist als vorgefertigtes Zulieferteil ausgelegt. Somit läßt sich das Faltdach 1 schnell und einfach in der Dachöffnung 6 des Fahrzeugs montieren. Somit wird ein kostengünstiger Einbau erreicht.

Selbstverständlich ist die Erfindung nicht auf die voranstehend beschriebenen Einzelheiten hinsichtlich des Faltdaches 1 beschränkt, sondern es sind zahlreiche Abänderungen und Modifikationen möglich, die der Fachmann im Bedarfsfall treffen wird, ohne den Erfindungsgedanken wie in den Ansprüchen dargestellt ist, zu verlassen. Insbesondere kann das Profilteil 5, 5' auch eine von der dargestellten Form abweichende Form haben, und insbesondere in Abhängigkeit von der Größe der Dachöffnung 6 können mehr oder weniger Querversteifungen 19 beim Faltdach 1 gegebenenfalls vorgesehen sein. Auch kann die Auslegung beispielsweise derart getroffen werden, daß das Abdeckteil 2 ohne Verwendung einer Gleitverbindungseinrichtung 3 beispielsweise an der hinteren Querkante der Dachöffnung 6 befestigbar ist. Hierzu können gegebenenfalls ineinandergreifende Einrichtungen vorgesehen sein, die nach einer Entsicherung und Entriegelung so voneinander lösbar sein können, daß sich das Abdeckteil 2 insgesamt vom Fahrzeugdach abnehmen läßt. Auch kann das Abdeckteil 2 beispielsweise nur zwei Klappfelder in Abweichung von der dargestellten Ausführungsform umfassen. Ferner kann in Abhängigkeit von der gegebenenfalls vorhandenen Dachwölbung die Auslegung des Faltdaches 1 so getroffen werden, daß die Querversteifungen 19 im Querschnitt einen gekrümmten Verlauf haben.

## Patentansprüche

1. Faltdach (1) für Fahrzeuge mit einem flexiblen, faltbaren Abdeckteil (2), welches über eine teilbare Gleitverbindungseinrichtung (3; 3', 3''), wie einen teilbaren Reißverschluß o.dgl. mit einem festen Dachteil (4) verbindbar ist, welches eine Dachöffnung (6) aufweist, dadurch **gekennzeichnet,** daß an der Begrenzungskante (7) der Dachöffnung (6) ein Profilteil (5, 5') derart vorgesehen ist, daß es einerseits im Zusammenwirken mit dem Abdeckteil (2) eine Außenabdichtung (8) bildet und andererseits am Profilteil (5, 5') fahrzeuginnenseitig eine Hälfte (11) der teilbaren Gleitverbindungseinrichtung (3; 3', 3'') vorgesehen ist.

2. Faltdach nach Anspruch 1, dadurch gekennzeichnet, daß das Profilteil (5) einen spitzwinklig zur Dachöffnungsbegrenzungskante (7) angeordneten, fahrzeuginnenseitigen Schenkel (9) hat, der die Hälfte (11) der teilbaren Gleitverbindungseinrichtung (3; 3', 3'') trägt.

3. Faltdach nach Anspruch 1 oder 2, dadurch gekennzeichnet, daß die am Profilteil (5) vorgesehene Hälfte (11) der Gleitverbindungseinrichtung (3) am Profilteil (5) befestigt oder angeformt ist.

4. Faltdach nach einem der Ansprüche 1 bis 3, dadurch gekennzeichnet, daß an der Vorderkante und/oder Hinterkante (30, 31) des Abdeckteils (2) im Abstand vom Außenrand (17) wenigstens eine Randaussteifung (16, 16') vorgesehen ist, die wenigstens teilweise zur Positionierung des Abdeckteils (2) am Profilteil (5, 5') anliegt.

5. Faltdach nach Anspruch 4, dadurch gekennzeichnet, daß die zweite Hälfte (12) der teilbaren Gleitverbindungseinrichtung (3) am Abdeckteil (2) in Richtung zur Dachöffnungsmitte liegend angebracht ist.

6. Faltdach nach einem der vorangehenden Ansprüche, dadurch gekennzeichnet, daß der Außenrandbereich des Abdeckteils (2) die Außenseite des Profilteils (5, 5') übergreift.

7. Faltdach nach Anspruch 6, dadurch gekennzeichnet, daß der Außenrandbereich des Abdeckteils (2) einen Saum (20) aufweist, in dem ein Versteifungsteil bzw. Spannseil (21) angeordnet ist.

8. Faltdach nach einem der vorangehenden Ansprüche, dadurch gekennzeichnet, daß das Abdeckteil (2) wenigstens eine Querversteifung (19) umfaßt.

9. Faltdach nach Anspruch 8, dadurch gekennzeichnet, daß in Längsrichtung des Abdeckteils (2) gesehen wenigstens zwei Querversteifungen (19) im gegenseitigen Abstand vorgesehen sind.

10. Faltdach nach einem der Ansprüche 4, 5 oder 7, dadurch gekennzeichnet, daß die Randaussteifung (16) und/oder die Querversteifung(en) (19) aus Rohrmaterial bestehen.

11. Faltdach nach einem der vorangehenden Ansprüche, dadurch gekennzeichnet, daß sich die teilbare Gleitverbindungseinrichtung (3; 3', 3'') über die beiden Längsseiten und wenigstens eine Querseite des Abdeckteils (2) erstreckt.

12. Faltdach nach einem der vorangehenden Ansprüche, dadurch gekennzeichnet, daß die teilbare Gleitverbindungseinrichtung (3; 3', 3'') in wenigstens zwei Teilstücke (3', 3'') unterteilt ist.

13. Faltdach nach einem der vorangehenden Ansprüche, dadurch gekennzeichnet, daß die Gleitverbindungseinrichtung (3) derart ausgelegt ist, daß das Abdeckteil (2) von vorne und/oder von hinten öffen- und schließbar ist.

14. Faltdach nach einem der vorangehenden Ansprüche, dadurch gekennzeichnet, daß die Gleitverbindungseinrichtung (3; 3', 3'') wenigstens zwei Schieber (15) umfaßt, die in Gegenrichtungen zum Öffnen und Schließen der Gleitverbindungseinrichtung (3; 3', 3'') bewegbar sind.

15. Faltdach nach einem der vorangehenden Ansprüche, dadurch gekennzeichnet, daß die Gleitverbindungseinrichtung (3; 3', 3'') ein Reißverschluß ist.

16. Faltdach nach einem der Ansprüche 1 bis 14, dadurch gekennzeichnet, daß die Gleitverbindungseinrichtung (3; 3', 3'') ein Paar komplementäre, in wechselseitigem Formschluß miteinander verriegelbare Profilstränge aufweist.

17. Faltdach nach einem der vorangehenden Ansprüche, dadurch gekennzeichnet, daß das Profilteil (5, 5') als Umlaufprofilteil ausgebildet ist.

18. Faltdach nach einem der vorangehenden Ansprüche, dadurch gekennzeichnet, daß das Profilteil (5, 5') auf die Begrenzungskante (7) der Dachöffnung (6) aufsteckbar ist.

19. Faltdach nach einem der vorangehenden Ansprüche, dadurch gekennzeichnet, daß das Profilteil (5, 5') einteilig ausgebildet ist.

20. Faltdach nach einem der vorangehenden Ansprüche, dadurch gekennzeichnet, daß eine Spanneinrichtung (36) das Abdeckteil (2) in seiner Schließlage eine Verdeckspannung aufbringt.

21. Faltdach nach einem der vorangehenden Ansprüche, dadurch gekennzeichnet, daß die übereinandergelegten Abschnitte des Abdeckteils (2) lösbar zusammengehalten sind.

## Claims

1. A folding roof (1) for vehicles, with a flexible foldable cover part (2) which, by means of a divisible sliding connecting means (3; 3', 3'') such as a divisible sliding clasp fastener or the like, can be connected to a fixed roof part (4) having a roof opening (6), characterised in that a profile part (5, 5') is so provided at the boundary edge (7) of the roof opening (6) that on the one hand and in conjunction with the cover part (2) it forms an outer seal (8) while on the other one half (11) of the divisible sliding connecting means (3; 3', 3'') is provided on the inside of the vehicle, on the profile part (5, 5').

2. A folding roof according to Claim 1, characterised in that the profile part (5) has, disposed at an acute angle to the edge (7) bounding the roof opening, a flange (9) on the vehicle interior and which carries the half (11) of the divisible sliding connecting means (3; 3', 3'').

3. A folding roof according to Claim 1 or 2, characterised in that the half (11) of the sliding connecting means (3) which is provided on the profile part (5) is fixed to or integrally formed on the profile part (5).

4. A folding roof according to one of Claims 1 to 3, characterised in that at the front edge and/or rear edge (30, 31) of the cover part (2), at least one marginal reinforcement (16, 16') is provided at a distance from the outer edge (17) and bears at least partially on the profile part (5, 5') in order to position the cover part (2).

5. A folding roof according to Claim 4, characterised in that the second half (12) of the divisible sliding connecting means (3) is mounted on the cover part (2) so that it lies in the direction of the middle of the roof opening.

6. A folding roof according to one of the preceding Claims, characterised in that the outer marginal zone of the cover part (2) engages over the outside of the profile part (5, 5').

7. A folding roof according to Claim 6, characterised in that the outer marginal zone of the cover part (2) comprises a border (20) in which there is a stiffening part or tensioning cable (21).

8. A folding roof according to one of the preceding Claims, characterised in that the cover part (2) comprises at least one transverse stiffening (19).

9. A folding roof according to Claim 8, characterised in that viewed in the longitudinal direction of the cover part (2) at least two mutually spaced apart transverse stiffenings (19) are provided.

10. A folding roof according to one of Claims 4, 5 or 7, characterised in that the marginal stiffening (16) and/or the transverse stiffenings (19) consist of tubular material.

11. A folding roof according to one of the preceding Claims, characterised in that the divisible sliding connecting means (3; 3', 3'') extends over the two long sides and at least one transverse side of the cover part (2).

12. A folding roof according to one of the preceding Claims, characterised in that the divisible sliding connecting means (3; 3', 3'') is subdivided into at least two parts (3', 3'').

13. A folding roof according to one of the preceding Claims, characterised in that the sliding connecting means (3) is so designed that the cover part (2) can be opened and closed both forwards and/or rearwards.

14. A folding roof according to one of the preceding Claims, characterised in that the sliding connecting means (3; 3', 3'') comprises at least two sliding members (15) adapted for movement in opposite directions for opening and closing the sliding connecting means (3; 3', 3'').

15. A folding roof according to one of the preceding Claims, characterised in that the sliding connecting means (3; 3', 3'') is a sliding clasp fastener.

16. A folding roof according to one of Claims 1 to 14, characterised in that the sliding connecting means (3; 3', 3'') comprises a pair of complementary profile rods adapted to be locked together in an alternating form closure.

17. A folding roof according to one of the preceding Claims, characterised in that the profile part (5, 5') is constructed as an encircling profile part.

18. A folding roof according to one of the preceding Claims, characterised in that the profile part (5, 5') can be fitted onto the boundary edge (7) of the roof opening (6).

19. A folding roof according to one of the preceding Claims, characterised in that the profile part (5, 5') is constructed in one piece.

20. A folding roof according to one of the preceding Claims, characterised in that a clamping device (36) applies roof tension to the cover part (2) when this is in its closed position.

21. A folding roof according to one of the preceding Claims, characterised in that the superposed portions of the cover part (2) are held together separably.

## Revendications

1. Toit ouvrant dépliable (1) pour véhicules, comprenant une partie de plafond (2) qui peut être reliée, par l'intermédiaire d'un dispositif séparable à glissement (3, 3', 3'') tel qu'une fermeture séparable à glissière, à un toit rigide (4) équipé d'une ouverture (6), caractérisé en ce que le bord (7) de l'ouverture (6) du toit est équipé d'un profité (5, 5') qui, d'une part, forme avec la partie de plafond (2) un joint d'étanchéité externe (8) et d'autre part, sur le profil (5,5') vers l'intérieur du véhicule est pprévue une moitié (11) du dispositif de liaison séparable (3, 3', 3'') à glissement.

2. Toit dépliable selon la revendication 1, caractérisé en ce que le profite (5) comporte une branche (9) qui fait avec le bord (7) de l'ouverture (6) du toit, un angle aigu en direction de l'intérieur du véhicule et qui porte la moitié (11) du dispositif de liaison séparable (3, 3', 3'') à glissement.

3. Toit dépliable selon une des revendications 1 ou 2, caractérisé en ce que la moitié (11) du dispositif de liaison (3) portée par le profilé (5) est fixée à celui-ci ou formée avec lui.

4. Toit dépliable selon une des revendications 1 à 3, caractérisé en ce qu'il est prévu le long du bord avant et/ou arrière (30, 31) de la partie de plafond (2), à une certaine distance du bord (17) proprement dit, au moins un raidisseur marginal (16, 16') qui vient s'appuyer le long du profilé (5, 5') au moins en partie, de manière à positionner la partie de plafond (2).

5. Toit dépliable selon la revendication 4, caractérisé en ce que la seconde moitié (12) de la liaison séparable (3) est montée sur la partie de plafond (2) par une partie à plat dirigée vers le centre de l'ouverture du toit.

6. Toit dépliable selon une des revendications précédentes, caractérisé en ce que la zone marginale de la partie de plafond (2) empiète avec le bord externe du profilé (5, 5').

7. Toit dépliable selon la revendication 6, caractérisé en ce que la zone marginale de la partie de plafond (2) comporte un ourlet (20) dans lequel est logé un élément raidisseur ou un cordon de tension (21).

8. Toit dépliable selon une des revendications précédentes, caractérisé en ce que la partie de plafond (2) contient au moins un raidisseur transversal (19).

9. Toit dépliable selon la revendication 8, caractérisé en ce qu'il comporte au moins deux raidisseurs transversaux, vus selon la direction longitudinale de la partie de plafond (2).

10. Toit dépliable selon une des revendications 4, 5 ou 7, caractérisé en ce que le raidisseur marginal (16) et/ou le raidisseur transversal (19) sont constitués d'un matériau tubulaire.

11. Toit dépliable selon une des revendications précédentes, caractérisé en ce que le dispositif de liaison séparable (3, 3', 3'') à glissement s'étend le long des deux côtés latéraux et au moins sur un côté transversal de la partie de plafond (2).

12. Toit dépliable selon une des revendications précédentes, caractérisé en ce que le dispositif de liaison séparable (3, 3', 3'') à glissement est divisé en au moins deux parties (3, 3'').

13. Toit dépliable selon une des revendications précédentes, caractérisé en ce que le dispositif de liaison séparable (3) est conçiu de manière à permettre l'ouverture et la fermeture de la partie de plafond (3), par l'avant et/ou par l'arrière.

14. Toit dépliable selon une des revendications précédentes, caractérisé en ce que le dispositif de liaison à glissement (3, 3', 3'') comprend au moins deux curseurs (15), mobiles en sens inverses, pour ouvrir et fermer le dispositif de liaison (3, 3', 3'').

15. Toit dépliable selon une des revendications précédentes, caractérisé en ce que le dispositif de liaison à glissement (3, 3', 3'') est une fermeture à glissière.

16. Toit dépliable selon une des revendications 1 à 14, caractérisé en ce que le dispositif de liaison à glissement (3, 3', 3'') comprend une paire de bandes profilées complémentaires, verrouillables l'une sur l'autre par interpénétration de formes.

17. Toit dépliable selon une des revendications précédentes, caractérisé en ce que le profilé (5, 5') est un profilé périphérique.

18. Toit dépliable selon une des revendications précédentes, caractérisé en ce que le profilé (5, 5') peut être emmanché sur le bord (7) délimitant l'ouverture (6) du toit.

19. Toit dépliable selon une des revendications précédentes, caractérisé en ce que le profilé (5, 5') est réalisé d'une seule pièce.

20. Toit dépliable selon une des revendications précédentes, caractérisé en ce qu'un dispositif de tension (36) donne à la partie de plafond (2) en position de fermeture, une tension de recouvrement.

21. Toit dépliable selon une des revendications précédentes, caractérisé en ce que les parties reposant l'une sur l'autre, de la partie de plafond (2), sont assemblées par une liaison amovible.
